# EUROPEAN PATENT APPLICATION

(11) **EP 3 438 908 A1**
(43) Date of publication of application: **06.02.2019**
(21) Application number: 17775165.8
(22) Date of filing: 29.03.2017
(51) Int. Cl.: G06Q 30/02

(54) **SALES ANALYSIS DEVICE, SALES ANALYSIS METHOD AND SALES ANALYSIS PROGRAM**

(30) Priority: 29.03.2016 JP 2016066251
(71) Applicant: Recruit Co., Ltd., Chuo-ku Tokyo 1040061 (JP)
(72) Inventor: IHARA, Shingo, Tokyo 100-6640 (JP)
(74) Representative: EIP
(86) International application number: PCT/JP2017/012785
(87) International publication number: WO 2017/170628

(57) **Abstract**

An analysis report suitable for a commercial establishment is created on a basis of sales data thereof. A template DB and the sales data of the commercial establishment are read, the template DB storing therein templates each of which defines an algorithm used for analyzing sales data and creating a report and is kept in correspondence with a different one of sets each made up of a business category and a commercial establishment scale. A business category is identified on a basis of sold commercial product data included in the sales data of the commercial establishment. A sales volume for each month is calculated on the basis of the sales data of the commercial establishment. A commercial establishment scale is identified on a basis of the calculated sales volumes. A template corresponding to the identified business category and to the identified commercial establishment scale is selected from the template DB. The sales data of the commercial establishment is analyzed by using the selected template, and a report based on a result of the analysis is created.

## Description

### Cross-reference to Related Application

This application is based on Japanese Patent Application (TOKUGAN) No. 2016-066251 filed on March 29, 2016, and the entire contents thereof are incorporated herein by reference.

### Technical Field

The present invention is related to a sales analyzing device, a sales analyzing method, and a sales analyzing program.

### Background Art

In recent years, a method called Business Intelligence (BI) is used for creating business strategies. According to this method, data such as sales data is gathered, accumulated, analyzed, and processed, so that the results can be visualized and used for decision making of management policies. Patent Literature 1 listed below discloses a commercial establishment sales management system that performs a sales analyzing process on the basis of sales data from each commercial establishment (such as a store, a restaurant, or the like) and that outputs a result of the analysis.

### Citation List

### Patent Literature

Patent Literature 1
Japanese Patent Laid-Open No. 11-250132

### Summary of Invention

When sales data is analyzed, there is a tendency that, among various business categories and various sales of commercial establishments, indices to be regarded important (prioritized) during the analyses and output formats required when results of the analyses are output will vary. Accordingly, when an analyzing system or an analyzing tool is to be introduced, it is desirable to customize the analyzing system or tool for each introduction destination, so as to be able to obtain optimal analysis results.

In contrast, according to the commercial establishment sales management system disclosed in Patent Literature 1, the performed sales analyzing process is in common to all the commercial establishments. For this reason, when the commercial establishment sales management system disclosed in Patent Literature 1 is applied to a plurality of commercial establishments that belong to mutually-different business categories or are on mutually-different scales, it is difficult to obtain an analysis result suitable for each of the commercial establishments.

In view of solving the problem presented above, it is an object of the present invention to provide a sales analyzing device, a sales analyzing method, and a sales analyzing program capable of creating an analysis report suitable for each commercial establishment on the basis of sales data.

A sales analyzing device according to an aspect of the present invention includes: means for storing therein templates each of which defines an algorithm used for analyzing sales data and creating a report and is kept in correspondence with a different one of sets each made up of a business category and a commercial establishment scale; means for reading sales data of a commercial establishment; means for identifying a business category on a basis of sold commercial product data included in the sales data of the commercial establishment; means for calculating a sales volume for each month on a basis of the sales data of the commercial establishment, and identifying a commercial establishment scale on a basis of the calculated sales volumes; means for selecting, from among the stored templates, a template corresponding to the identified business category and to the identified commercial establishment scale; and means for analyzing the sales data of the commercial establishment by using the selected template, and creating a report on a basis of a result of the analysis.

The means for creating the report may create a graph based on the result of the analysis, as the report, and when the commercial establishment scale is equal to or larger than a prescribed level, the means for creating the report may create quantified data based on the result of the analysis in addition to the graph.

The sales analyzing device may further include: means for identifying a popular commercial product having a large sales volume in the commercial establishment on the basis of the sales data of the commercial establishment. The means for creating the report may calculate ranking of commercial products sold together with the popular commercial product, on a basis of sales volumes of the identified popular commercial product and other commercial products and may further create the ranking of the commercial products sold together with the popular commercial product as the report.

The sales analyzing device may further include: means for judging whether or not the commercial establishment is part of a chain business on the basis of the sold commercial product data included in the sales data of the commercial establishment. When the commercial establishment is determined to be part of a chain business, the means for creating the report may further create, as the report, data for a headquarter office that collectively manages commercial establishments in the chain business.

A sales analyzing method according to an aspect of the present invention is implemented by a terminal and includes: a step of reading sales data of a commercial establishment; a step of identifying a business category on a basis of sold commercial product data included in the sales data of the commercial establishment; a step of calculating a sales volume for each month on a basis of the sales data of the commercial establishment, and identifying a commercial establishment scale on a basis of the calculated sales volumes; a step of selecting a template corresponding to the identified business category and to the identified commercial establishment scale, from within a storage device storing therein templates each of which defines an algorithm used for analyzing sales data and creating a report and is kept in correspondence with a different one of sets each made up of a business category and a commercial establishment scale; and a step of analyzing the sales data of the commercial establishment by using the selected template, and creating a report on a basis of a result of the analysis.

A sales analyzing program according to an aspect of the present invention causes a computer to function as: means for storing therein templates each of which defines an algorithm used for analyzing sales data and creating a report and is kept in correspondence with a different one of sets each made up of a business category and a commercial establishment scale; means for reading sales data of a commercial establishment; means for identifying a business category on a basis of sold commercial product data included in the sales data of the commercial establishment; means for calculating a sales volume for each month on a basis of the sales data of the commercial establishment, and identifying a commercial establishment scale on a basis of the calculated sales volumes; means for selecting, from among the stored templates, a template corresponding to the identified business category and to the identified commercial establishment scale; and means for analyzing the sales data of the commercial establishment by using the selected template, and creating a report on a basis of a result of the analysis.

### Advantageous Effects of Invention

According to the present disclosure, it is possible to create the analysis report suitable for each commercial establishment, on the basis of the sales data thereof.

### Brief Description of Drawings

[Figure 1] Figure 1 is a diagram illustrating a configuration of a commercial product management system including one or more commercial establishment terminals according to an embodiment.
[Figure 2] Figure 2 is a diagram illustrating a configuration of the commercial establishment terminal illustrated in Figure 1.
[Figure 3] Figure 3 is a flowchart for explaining a processing procedure used for analyzing sales data of a commercial establishment and creating a report on the basis of a result the analysis.

### Description of Embodiments

In the following sections, embodiments of the present invention will be explained in detail, with reference to the drawings. Some of the elements that are the same as each other will be referred to by using the same reference characters, and duplicate explanations thereof will be omitted.

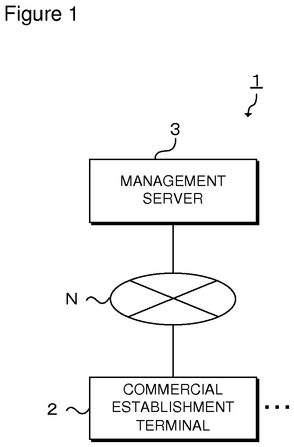

Figure 1 is a schematic diagram illustrating a configuration of a commercial product management system including one or more commercial establishment terminals (sales analyzing devices) according to an embodiment of the present invention. A commercial product management system 1 includes one or more commercial establishment terminals 2 and a management server 3. The commercial establishment terminals 2 and the management server 3 are configured to be able to communicate with each other via a network N.

In the present embodiment, as an example, a situation will be explained in which the commercial establishment terminals 2 are introduced to commercial establishments of restaurants. One or more commercial establishment terminals 2 may be provided for each commercial establishment.

Each of the commercial establishment terminals 2 has, for example, an order receiving function, an accounting function, and a sales analyzing function. The order receiving function is a function that registers the content of an order received from a client who visits the commercial establishment. The accounting function is a function that performs an accounting process (e.g., a sales data registering process, a payment receipt issuing process) by using the registered content of the order. The sales analyzing function is a function that analyzes sales data of the commercial establishment accumulated by the accounting process and creates a report based on a result of the analysis. Details of the sales analyzing function will be explained later.

The pieces of data and the result of analysis registered in the commercial establishment terminal 2 are transmitted to the management server 3 as necessary and are managed in the management server 3 while a commercial establishment ID or the like is appended thereto.

In the present embodiment, the commercial establishment terminal 2 is assumed to be a tablet terminal. However, possible embodiments of the commercial establishment terminal 2 are not limited to this example. For example, as each of the commercial establishment terminals 2, it is possible to use, as appropriate, any of the following: a notebook Personal Computer (PC), a smartphone, a mobile phone, a mobile information terminal (PDA), and other types of terminal devices.

The management server 3 may be configured by using, for example, a computer having a high level of computation processing capability. The management server 3 realizes a server function, as a result of a prescribed server-specific program operating in the computer. In this situation, the number of computers used for structuring the management server 3 does not necessarily have to be one. The management server 3 may be structured by using a plurality of computers distributed throughout a network.

The network N includes a communication network in which it is possible to transmit and receive information between the commercial establishment terminals 2 and the management server 3. The network N may be, for example, the Internet, a Local Area Network (LAN), a dedicated line, a telephone line, an intra-corporation network, a mobile communication network, Bluetooth (registered trademark), Wireless Fidelity (WiFi), any other communication line, or a combination of any of the above examples. The network N may be wired or wireless.

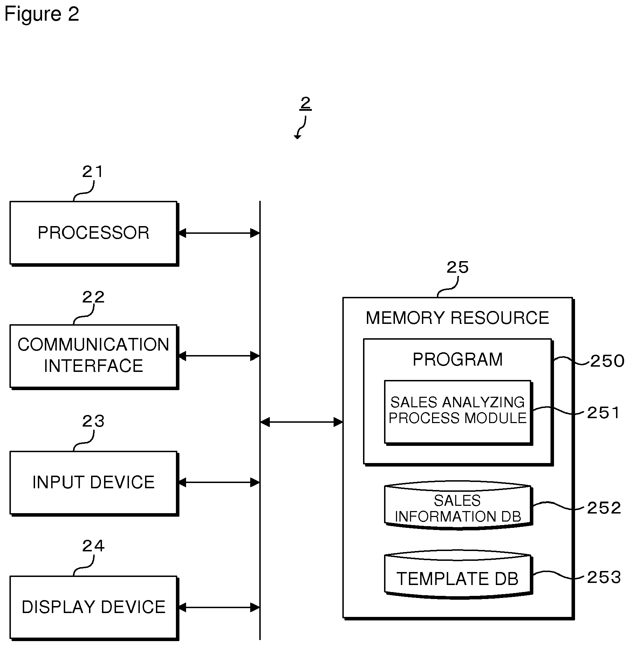

Figure 2 is a block diagram schematically illustrating a configuration of any of the commercial establishment terminals 2. The commercial establishment terminal 2 includes, for example, a processor 21, a communication interface 22, an input device 23, a display device 24, and a memory resource 25.

The processor 21 is configured by using an arithmetic logic unit and various types of registers (such as a program counter, a data register, an instruction register, a generic register, and/or the like). By executing a program 250 stored in the memory resource 25, the processor 21 realizes various types of functions such as the sales analyzing function. Examples of the program 250 include a sales analyzing application program (i.e., a sales analyzing program, which may hereinafter be referred to as "a sales analyzing app") installed in the commercial establishment terminal 2. The application program may be, for example, downloaded from the management server 3 via the network N and installed into the commercial establishment terminal 2.

The communication interface 22 is used for providing a connection interface to connect to the management server 3 and is configured by using a wireless communication interface or a wired communication interface. The input device 23 is used for providing an interface to receive input operations from a user and may be, for example, a touch panel, a keyboard, a mouse, and/or the like. The display device 24 is used for providing the user with an image display interface such as a display screen that is used when various types of functions are executed. For instance, examples of the display device 24 include an organic EL display device, a liquid crystal display device, and a CRT display device. In the present embodiment, as the input device 23 and the display device 24, a touch-panel-attached display device is used as an example.

The memory resource 25 may be, for example, a logic device provided by a storage region of a physical device. The physical device may be, for example, a computer-readable recording medium such as a disk drive or a semiconductor memory. In addition to the program 250 described above, the memory resource 25 stores therein an operating system program, a driver program, various types of data, and the like. Examples of the driver program include an input device driver program used for controlling the input device 23, an output device driver program used for controlling the display device 24, and the like.

Examples of the various types of data include sales data such as sales date/time data, sold commercial product data, sales proceed data, and/or the like; and template information including templates each of which defines an algorithm used for analyzing sales information and creating a report. For example, the sales data has, as data items thereof, a sales date/time item, a sold commercial product item, a sales proceed item, and the like and is stored in a sales information database (DB) 252. For example, the template information has, as data items thereof, a business category item, a commercial establishment scale item, a template item, and the like and is stored in a template DB 253.

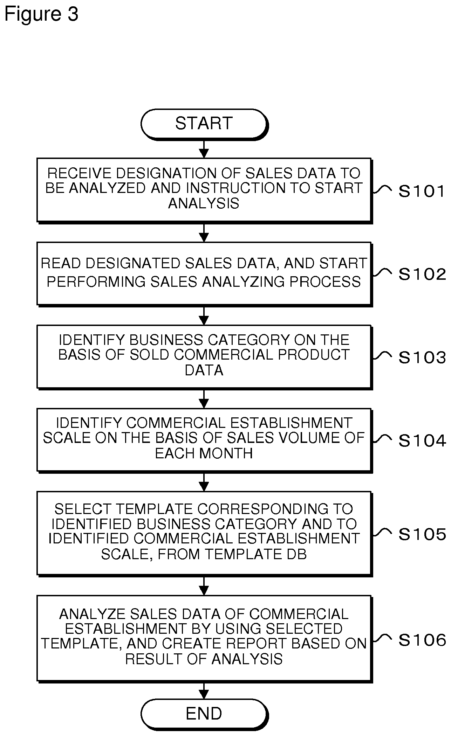

The program 250 according to the present embodiment includes, in an example, a sales analyzing process module 251. As a result of executing the sales analyzing process module 251, the sales analyzing function is realized. With reference to Figure 3, an example of a procedure that is performed when sales data of a commercial establishment is analyzed, so as to create a report on the basis of a result of the analysis will be explained. Figure 3 is a flowchart illustrating a flow in a basic process performed by any of the commercial establishment terminals 2 when analyzing the sales data and creating the report.

At first, when a startup request to start up the sales analyzing app in the commercial establishment terminal 2 is received in accordance with an operation performed by a clerk who is a user, the sales analyzing process module 251 included in the commercial establishment terminal 2 causes the display 24 to display an analyzing process execution screen (step S101). The startup request to start up the sales analyzing app is made, for example, by tapping (selecting) an icon displayed on the display 24 of the commercial establishment terminal 2.

Subsequently, when a designation of a piece of sales data to be analyzed and an instruction to start an analysis are received in accordance with an operation performed by the clerk, the sales analyzing process module 251 reads the designated piece of sales data, and starts performing a sales analyzing process (step S102).

Subsequently, the sales analyzing process module 251 identifies the business category of the commercial establishment on the basis of the sold commercial product data included in the sales data (step S103).

More specifically, for example, by referring to a business category table having configured therein commercial product names, service names, and the like kept in correspondence with business category names, the sales analyzing process module 251 selects a business category name corresponding to pieces of sold commercial product data and further identifies the business category of the commercial establishment by analyzing the selected business category name.

In this situation, examples of the business categories include retail businesses, restaurant businesses, service industry businesses, and the like. An example of a data structure stored in the business category table will be explained below. Commercial product names such as "women's clothes", "business shoes", "mechanical pencils", and the like are stored while being kept in correspondence with the business category name "retail businesses". Commercial product names such as "hamburgers", "set meals of the day", "tonkotsu ramen noodles", and the like are stored while being kept in correspondence with the business category name "restaurant businesses". Service names such as "haircuts", "shampooing", "amusement park admission fees", and the like are stored while being kept in correspondence with the business category name "service industry businesses".

Subsequently, the sales analyzing process module 251 calculates a sales volume for each month on the basis of the sales data and further identifies the scale of the commercial establishment (hereinafter, "commercial establishment scale") on the basis of the calculated sales volumes (step S104).

More specifically, for example, by referring to a commercial establishment scale table having configured therein a commercial establishment scale in correspondence with each of various ranges of sales proceed amounts, the sales analyzing process module 251 identifies the commercial establishment scale corresponding to the sales volumes. Examples of the commercial establishment scale include "large scale", "medium scale", "small scale", and the like.

Subsequently, from the template DB 253, the sales analyzing process module 251 selects a template corresponding to the business category identified at step S103 and to the commercial establishment scale identified at step S104 (step S105).

In this situation, because indices to be prioritized during the analysis will vary depending on the business category, various analyzing algorithms having mutually-different analysis indices are prepared in correspondence with various business categories, so that each of the analyzing algorithms is configured into a template corresponding to a different one of the business categories. Examples of the indices to be prioritized in each of various business categories can be explained as follows: In retail businesses, prioritized indices are: a concurrent selling ratio, a combo ratio (a ratio of multiple commercial products being purchased together), a sales-per-customer value, and the like. In restaurant businesses, prioritized indices are: the number of people in each party, a reservation ratio, ABC analysis (e.g., popularity ranking for each menu item), and the like. In service industry businesses, prioritized indices are: a sales-per-customer value, a reservation ratio, a principle commercial product (a main menu item), a unit price per period of time (e.g., a fee for a massage per treatment time period), and the like.

Further, because the output format required to output a result of the analysis will vary depending on the commercial establishment scale, various output algorithms having mutually-different analysis result output formats are prepared in correspondence with various commercial establishment scales, so that each of the output algorithms is configured into a template corresponding to a different one of the commercial establishment scales. Examples of the analysis result output formats include a graph based on the analysis result, quantified data based on the analysis result, and the like. Depending on the commercial establishment scale, it is possible to set the interval of the graduations on the coordinate axes of a graph, the size of a range of items grouped together as other commercial products, and the like.

Further, an arrangement is acceptable in which only a graph based on the analysis result is output when the commercial establishment scale is relatively small, whereas quantified data based on the analysis result is output in addition to a graph based on the analysis result when the commercial establishment scale is relatively large. Further, another arrangement is also acceptable in which analysis results of all the commercial products are displayed when the commercial establishment scale is relatively small, whereas ranking of only popular commercial products (menu items) is displayed when the commercial establishment scale is relatively large. To judge whether the commercial establishment scale is relatively small or relatively larger, it is possible, for example, to set a threshold value based on the sales volume for each month and to make judgement by using the threshold value.

Subsequently, by using the template selected at step S105, the sales analyzing process module 251 analyzes the sales data of the commercial establishment and further creates a report based on a result of the analysis (step S106) .

In this situation, in addition to the functions explained in the basic flow above, the sales analyzing app is capable of realizing (1) a function of creating ranking of commercial products sold together with a popular commercial product and (2) a function of creating a report for a headquarter office.

### (1) The function of creating raking of commercial products sold together with a popular commercial product

On the basis of the sales data, the sales analyzing process module 251 identifies a popular commercial product having a large sales volume in the commercial establishment. On the basis of sales volumes of the identified popular commercial product and other commercial products, the sales analyzing process module 251 calculates the ranking of commercial products sold together with the commercial product. The sales analyzing process module 251 further creates a report on the basis of the ranking of the commercial products sold together with the popular commercial product. Conditions used for identifying the popular commercial product may arbitrarily be set. For example, the popular commercial product may be determined according to ranking of sales volumes or may be determined according to a percentage of the sales volume of each commercial product in the entire sales volume.

### (2) The function of creating a report for a headquarter office

On the basis of the sold commercial product data included in the sales data, the sales analyzing process module 251 judges whether or not the commercial establishment is part of a chain business. When having determined that the commercial establishment is part of a chain business, the sales analyzing process module 251 creates data to be submitted to a headquarter office that collectively manages commercial establishments belonging to the chain business so as to create a report for the headquarter office. For example, the report for the headquarter office may display, in a collective manner, items that can easily be compared among the commercial establishments, such as total sales proceed amounts, sales-per-customer values, sales proceed amounts tallied for days of the week, total profit values, and the like.

More specifically, for example, the sales analyzing process module 251 judges whether or not the commercial establishment is part of a chain business or not, on the basis of whether or not a piece of sold commercial product data corresponding to any of commercial product names specific to chain businesses is present, by referring to a chain business commercial product table registering therein the commercial product names specific to the chain businesses. Further, another arrangement is also acceptable in which the sales analyzing process module 251 judges whether or not the commercial establishment is part of a chain business by using the name of the commercial establishment.

As explained above, by using the commercial establishment terminal 2 according to the present embodiment, it is possible to read the sales data of the commercial establishment, to identify the business category on the basis of the sold commercial product data included in the sales data, and to further calculate the sales volume for each month on the basis of the sales data, and to identify the commercial establishment scale on the basis of the calculated sales volumes. Further, it is also possible to select, from the template DB, the template corresponding to the identified business category and to the identified commercial establishment scale, to analyze the sales data of the commercial establishment by using the selected template, and to create the report based on the result of the analysis.

With these arrangements, by using the commercial establishment terminal 2 according to the embodiment, it is possible to create the analysis report suitable for the commercial establishment on the basis of the sales data of the commercial establishment.

The present invention is not limited to the embodiments described above. It is possible to carry out the present invention in other various forms, as long as the variations do not depart from the gist of the present invention. Accordingly, the embodiments described above are merely examples in every aspect and are not intended to be construed with limitations. For example, it is possible to arbitrarily change the order of the processing steps described above or to perform any of the processing steps in parallel to each other, as long as no conflict occurs among the processes.

Further, the programs according to the embodiments may be installed or loaded into a computer, via any of various types of recording media (computer-readable recording media) such as an optical disk (e.g., a CD-ROM), a magnetic disk, a semiconductor memory, and the like or as being downloaded via a communication network or the like.

### Industrial Applicability

The sales analyzing device, the sales analyzing method, and the sales analyzing program according to the present invention are suitable for creating the analysis report suitable for each commercial establishment on the basis of the sales data thereof.

### Reference Signs List

1: commercial product management system; 2: commercial establishment terminal; 3: management server; 21: processor; 22: communication interface; 23: input device; 24: display device (display); 25: memory resource; 250: program; 251: sales analyzing process module; 252: sales information DB; 253: template DB; N: network

## Claims

1. A sales analyzing device comprising:
means for storing therein templates each of which defines an algorithm used for analyzing sales data and creating a report and is kept in correspondence with a different one of sets each made up of a business category and a commercial establishment scale;
means for reading sales data of a commercial establishment;
means for identifying a business category on a basis of sold commercial product data included in the sales data of the commercial establishment;
means for calculating a sales volume for each month on a basis of the sales data of the commercial establishment, and identifying a commercial establishment scale on a basis of the calculated sales volumes;
means for selecting, from among the stored templates, a template corresponding to the identified business category and to the identified commercial establishment scale; and
means for analyzing the sales data of the commercial establishment by using the selected template, and creating a report on a basis of a result of the analysis.

2. The sales analyzing device according to claim 1, wherein
the means for creating the report creates a graph based on the result of the analysis, as the report, and
when the commercial establishment scale is equal to or larger than a prescribed level, the means for creating the report creates quantified data based on the result of the analysis in addition to the graph.

3. The sales analyzing device according to claim 2, further comprising: means for identifying a popular commercial product having a large sales volume in the commercial establishment on the basis of the sales data of the commercial establishment, wherein
the means for creating the report calculates ranking of commercial products sold together with the popular commercial product, on a basis of sales volumes of the identified popular commercial product and other commercial products and further creates the ranking of the commercial products sold together with the popular commercial product as the report.

4. The sales analyzing device according to claim 2 or 3, further comprising: means for judging whether or not the commercial establishment is part of a chain business on the basis of the sold commercial product data included in the sales data of the commercial establishment, wherein
when the commercial establishment is determined to be part of a chain business, the means for creating the report further creates, as the report, data for a headquarter office that collectively manages commercial establishments in the chain business.

5. A sales analyzing method being implemented by a terminal and comprising:
a step of reading sales data of a commercial establishment;
a step of identifying a business category on a basis of sold commercial product data included in the sales data of the commercial establishment;
a step of calculating a sales volume for each month on a basis of the sales data of the commercial establishment, and identifying a commercial establishment scale on a basis of the calculated sales volumes;
a step of selecting a template corresponding to the identified business category and to the identified commercial establishment scale, from within a storage device storing therein templates each of which defines an algorithm used for analyzing sales data and creating a report and is kept in correspondence with a different one of sets each made up of a business category and a commercial establishment scale; and
a step of analyzing the sales data of the commercial establishment by using the selected template, and creating a report on a basis of a result of the analysis.

6. A sales analyzing program that causes a computer to function as:
means for storing therein templates each of which defines an algorithm used for analyzing sales data and creating a report and is kept in correspondence with a different one of sets each made up of a business category and a commercial establishment scale;
means for reading sales data of a commercial establishment;
means for identifying a business category on a basis of sold commercial product data included in the sales data of the commercial establishment;
means for calculating a sales volume for each month on a basis of the sales data of the commercial establishment, and identifying a commercial establishment scale on a basis of the calculated sales volumes;
means for selecting, from among the stored templates, a template corresponding to the identified business category and to the identified commercial establishment scale; and
means for analyzing the sales data of the commercial establishment by using the selected template, and creating a report on a basis of a result of the analysis.
